# EUROPÄISCHE PATENTSCHRIFT

(11) **EP 0 697 239 B1**
(45) Veröffentlichungstag und Bekanntmachung des Hinweises auf die Patenterteilung: **14.06.2000**
(21) Anmeldenummer: 95112345.4
(22) Anmeldetag: 05.08.1995
(51) Int. Cl.: B01D 53/70, B01D 53/72

(54) **Verfahren und Vorrichtung zur Abtrennung von polycyclischen und polyhalogenierten Kohlenwasserstoffen, insbesondere von Dioxinen und Furanen, aus dem Abgas eines Sinterprozesses**
Process and apparatus for separating polycyclic and polyhalogenated hydrocarbons, in particular dioxines and furanes from an exhaust gas of a sintering process
Procédé et dispositif pour la séparation d'hydrocarbures polycycliques et polyhalogénés, en particulier de dioxines et furanes d'un gaz de fumée d'un procédé de frittage

(30) Priorität: 16.08.1994 DE 4429027
(43) Veröffentlichungstag der Anmeldung: 21.02.1996
(73) Patentinhaber: Metallgesellschaft Aktiengesellschaft, 60325 Frankfurt am Main (DE)
(72) Erfinder: Herden, Hansjörg, Dr., D-63110 Rodgau (DE); Federhen, Stefan, D-60538 Frankfurt am Main (DE); Mayer-Schwinning, Gernot, D-61352 Bad Homburg (DE); Roth, Hubert, D-61118 Bad Vilben (DE)

(56) Entgegenhaltungen:
- EP-A- 0 412 591
- EP-A- 0 455 152
- EP-A- 0 479 350
- EP-A- 0 677 319
- DE-A- 3 941 894

## Beschreibung

Die Erfindung bezieht sich auf ein Verfahren und eine Vorrichtung zur Abtrennung von polycyclischen und polyhalogenierten Kohlenwasserstoffen, insbesondere von polyhalogenierten Dibenzodioxinen und Dibenzofuranen, aus dem Abgas eines Sinterprozesses, insbesondere eines Eisenerz-Sinterprozesses.

Feinkörnige oder pulverförmige Materialien werden durch Sinterung kompaktiert und dadurch in leichter zu handhabende Formen, wie z.B. Granulate und Pellets, überführt. Das Sintern wird beispielsweise zum Kompaktieren von Erzen eingesetzt. Zu diesem Zweck wird das feinkörnige Erz mit feinkörnigen, kohlenstoffhaltigen Brennstoffen gemischt, agglomeriert und in einer Sinteranlage unter Zufuhr von sauerstoffhaltigen Gasen auf Temperaturen oberhalb 1000°C erhitzt. Die gesinterten Erzagglomerate haben die Form von Granulaten oder Pellets und besitzen eine bestimmte mechanische Festigkeit, so daß sie problemlos - beispielsweise in Hochöfen - zu Metallen reduziert werden können. Bei der Sinterröstung werden feinkörnige sulfidische Erze abgeröstet und gleichzeitig zu gesinterten Granulaten und Pellets verarbeitet.

Beim Sintern werden insbesondere Carbonate und Sulfate zersetzt, Sulfide oxidiert, leichtflüchtige Oxide, Sulfide und Chloride verdampft und gebundenes Wasser ausgetrieben. Die beim Sinterprozeß entstehenden Abgase enthalten also die bei der Verbrennung von Kohlenstoff gebildeten gasförmigen Reaktionsprodukte CO und CO₂ sowie die aus den Erzen freigesetzten gasförmigen Schadstoffe.

Da beim Sinterprozeß auch Halogenide, insbesondere Chloride, sowie Kohlenstoff anwesend sind, kommt es zur Bildung von polycyclischen und polyhalogenierten Kohlenwasserstoffen und insbesondere von polyhalogenierten Dibenzodioxinen (PCDD) und polyhalogenierten Dibenzofuranen (PCDF), die mit dem Abgasstrom aus der Sinteranlage ausgetragen werden. Schließlich ist das Abgas des Sinterprozesses mit staubförmigen Feststoffteilchen verunreinigt. Es ist erforderlich, die gasförmigen Schadstoffe, insbesondere CO, SO₂, HCl und HF, den Staub sowie die polycyclischen und polyhalogenierten Kohlenwasserstoffe, vorzugsweise die polyhalogenierten Dibenzodioxine und Dibenzofurane, aus dem Abgas abzutrennen, bevor es in die Atmosphäre entlassen wird.

Aus der DE-PS 41 05 214 ist ein Verfahren zur Reinigung des Abgasstroms einer Sinteranlage bekannt, bei dem der aus einer Bandsintermaschine abgezogene Abgasstrom in einer Elektroabscheideranlage entstaubt wird und bei dem der aus der Elektroabscheideranlage austretende Abgasstrom mit einer feindispersen, wäßrigen Behandlungslösung, die Wasserstoffperoxid enthält, angefeuchtet und anschließend einem Gaswäscher zugeführt wird, der ein Sprühelektrodenaggregat sowie eine daran anschließende Waschzone aufweist, und bei dem der angefeuchtete und tropfenfrei durch das Sprühelektrodenaggregat geführte Abgasstrom in der Waschzone des Gaswäschers mit feindisperser Waschflüssigkeit beaufschlagt wird, die feingemahlene Aktivkohle oder feingemahlenen Herdofenkoks enthält. Bei dem bekannten Verfahren ist alternativ vorgesehen, daß der angefeuchtete und tropfenfrei durch das Sprühelektrodenaggregat geführte Abgasstrom in der Waschzone des Gaswäschers mit feindisperser Waschflüssigkeit beaufschlagt wird, die in einem Waschflüssigkeitskreislauf geführt und vor Eintritt in den Gaswäscher durch einen Aktivkohlefilter oder eine Schüttung aus Herdofenkoks hindurchgeführt wird.

Aus der DE-OS 41 13 597 ist ein Verfahren zur Reinigung von Abgas bekannt, bei dem zusätzlich zur Entfernung von Staub, HCl, HF, SO₂ und ggf. NOₓ Schadstoffe, insbesondere Dioxine und Furane, durch Adsorption an einem Adsorptionsmittel entfernt werden, wobei als Adsorptionsmittel Zeolithe mit einem Mol-Verhältnis SiO₂ zu Al₂O₃ von 2 bis 6 eingesetzt werden. Bei diesem Verfahren ist ferner vorgesehen, daß das Abgas zunächst mit den Zeolithen vermischt und anschließend durch ein Gewebefilter mit einer Filterschicht geleitet wird, wobei dem Abgas pro m³ 30 bis 700 mg Zeolithe mit einem Korndurchmesser von 1 bis 100 µm, insbesondere 5 bis 20 µm, zugeführt werden.

Aus der DE-OS 40 12 982 ist ein Verfahren zur Reinigung von Gasen und Abgasen von anorganischen und organischen Schadstoffen bekannt, bei dem feinpulveriges, aktiviertes Aluminiumoxid, Kieselgel, Kieselgur, feinpulverige Zeolithe und/oder ähnliche anorganische Stoffe in den Gasstrom eingeblasen werden, Gas und Feststoff durchmischt, die Feststoffe auf ein Flächenfilter aufgetragen, als erneuerbare, lockere hinreichend tiefe Adsorptionsschicht auf dem Filter belassen und die Feststoffe von dort mechanisch, mit Schadstoffen beladen, entfernt werden. Bei dem bekannten Verfahren ist ferner vorgesehen, daß die oberflächenaktiven, anorganischen Substanzen als feinpulveriges Material eingesetzt werden, deren Kornverteilung zu 100 % < 100 µm, vorzugsweise 50 µm ist. Dieses Verfahren soll u.a. zur Abscheidung von Dioxinen und Furanen eingesetzt werden.

Die DE-OS 41 28 106 beschreibt ein Verfahren zur selektiven Abtrennung von hochkondensierten, polycyclischen Kohlenwasserstoffen, insbesondere von halogenierten Dibenzodioxinen und Dibenzofuranen, aus vorentstaubten, SO₂-, H₂O- und Schwermetall-haltigen Abgasen durch Adsorption der Kohlenwasserstoffe an festen Adsorptionsmitteln, bei dem als Adsorptionsmittel ein dealuminierter Zeolith mit einem SiO₂/Al₂O₃-Verhältnis von 20 : 1 bis 1000 : 1 zum Einsatz kommt, die Adsorption bei einer Temperatur von 20 bis 200°C erfolgt, der Zeolith einen Teilchendurchmesser von 1 bis 5 mm hat und in einem Festbettreaktor oder einem Reaktor mit bewegtem Bett angeordnet ist.

In DE-OS-440 32 44 wird ein Verfahren zur Reinigung von sauerstoffhaltigen, bei der Verbrennung von Müll, Industrieabfällen und Klärschlamm anfallenden Abgasen vorgeschlagen, bei dem u.a. polyhalogenierte Kohlenwasserstoffe durch Adsorption an Zeolithen aus den Abgasen entfernt werden, wobei die Abgase oberhalb des Taupunkts bei einer Temperatur von 80 bis 180°C und einer Gasgeschwindigkeit von 3 bis 20 m/s mit einer Mischung aus natürlich vorkommenden Zeolithen während einer Reaktionszeit von 0,5 bis 10 s in einer Gas-Feststoff-Suspension zur Reaktion gebracht werden und wobei die mittlere Teilchengröße d₅₀ der Zeolith-Mischung 5 bis 50 µm und die mittlere Suspensionsdichte der Gas-Feststoff-Suspension 0,02 bis 10 kg Feststoff pro Nm³ Abgas beträgt (Nm³ = m³ Gas im Normalzustand, trocken).

Schließlich wird in DE-OS-4 413 280 ein Verfahren zur Abtrennung von polyhalogenierten Dibenzodioxinen und Dibenzofuranen aus dem Abgas eines Sinterprozesses, insbesondere eines Eisenerz-Sinterprozesses, vorgeschlagen, bei dem das gesamte, staubhaltige Abgas des Sinterbandes oberhalb des Taupunktes bei einer Temperatur von 90 bis 180°C und einer Geschwindigkeit von 6 bis 20 m/s mit einer Mischung aus natürlich vorkommenden Zeolithen in einer Gas-Feststoff-Suspension während einer Reaktionszeit von 0,5 bis 10 s in Kontakt gebracht wird, wobei der mittlere Teilchendurchmesser d₅₀ der Zeolith-Mischung 5 bis 100 µm und die mittlere Suspensionsdichte der Gas-Feststoff-Suspension 5 bis 500 g Feststoff pro Nm³ Abgas beträgt, bei dem der Staub sowie die Zeolith-Mischung anschließend gemeinsam aus der Gas-Feststoff-Suspension abgetrennt werden und bei dem ein Teil der abgetrennten Feststoffe mit dem Abgas des Sinterbandes erneut in Kontakt gebracht wird. Dieses bekannte Verfahren wird in einer Vorrichtung durchgeführt, die aus einem Flugstromreaktor, einem mehrfeldrigen Elektroabscheider und einer Feststoff-Rückführleitung besteht, wobei die Feststoff-Rückführleitung den Sammelraum des ersten Feldes des Elektroabscheiders oder die Sammelräume des ersten und zweiten Feldes des Elektroabscheiders mit der in den Flugstromreaktor mündenden Abgasleitung verbindet. Bei dieser Vorrichtung ist alternativ vorgesehen, daß anstelle des Elektroabscheiders ein Schlauchfilter zum Einsatz kommt.

Die technische Anwendbarkeit der bekannten Abgasreinigungsverfahren bei der Reinigung von Sinterabgasen hängt insbesondere davon ab, daß sie möglichst geringe Investitions- und Betriebskosten verursachen und daß sie Verfahrensprodukte liefern, die in möglichst geringer Menge anfallen sowie entweder ohne größere Schwierigkeiten deponiert oder im Sinterprozeß verarbeitet oder nach einer Regeneration in die Reinigungsprozesse zurückgeführt werden. Die vorliegende Erfindung hat sich das Ziel gesetzt, als Adsorptionsmittel anorganische Materialien zu benutzen, um die Verwendung von Aktivkohle als Adsorptionsmittel zu minimieren sowie die damit einhergehenden Gefahren für die Betriebssicherheit der Adsorptionsanlagen zu vermeiden. Es hat sich gezeigt, daß die bekannten Reinigungsverfahren wegen der gestiegenen Anforderungen an die Reinigungsleistung und die Wirtschaftlichkeit verbessert werden müssen. Daher liegt der Erfindung die Aufgabe zugrunde, ein Verfahren zur Reinigung von Sinterabgasen zu schaffen, das auch bei Schwankungen der einzelnen Schadstoffkonzentrationen zuverlässig die Einhaltung von niedrigen Schadstoffkonzentrationen im Reingas gestattet und das vor allem wirtschaftlich arbeitet. Das Verfahren muß insbesondere gewährleisten, daß das Reingas eine Konzentration an polyhalogenierten Dibenzodioxinen und Dibenzofuranen von < 0,1 ng TE pro Nm³ hat (TE = Toxizitäts-Äquivalente gemäß NATO-Standard). Der Erfindung liegt ferner die Aufgabe zugrunde, eine Vorrichtung zur Durchführung des Verfahrens zu schaffen.

Die der Erfindung zugrundeliegende Aufgabe wird dadurch gelöst, daß das gesamte, staubhaltige Abgas des Sinterbandes oberhalb des Taupunktes bei einer Temperatur von 90 bis 180°C und einer Geschwindigkeit von 6 bis 20 m/s mit Tonen, Schichtsilikaten oder Diatomeenerde oder Mischungen davon in einer Gas-Feststoff-Suspension während einer Reaktionszeit von 0,5 bis 10 s in Kontakt gebracht wird, wobei der mittlere Teilchendurchmesser d₅₀ dieser Feststoffe 5 bis 100 µm und die mittlere Suspensionsdichte der Gas-Feststoff-Suspension 5 bis 500 g Feststoff pro Nm³ Abgas beträgt, daß der Staub sowie die Feststoffe anschließend gemeinsam aus der Gas-Feststoff-Suspension abgetrennt werden und daß ein Teil der abgetrennten Feststoffe mit dem Abgas des Sinterbandes erneut in Kontakt gebracht wird.

Mit dem erfindungsgemäßen Verfahren kann im Reingas zuverlässig eine Konzentration an polyhalogenierten Dibenzodioxinen und Dibenzofuranen < 0,1 ng TE pro Nm³ eingehalten werden, wobei das verunreinigte Abgas des Sinterprozesses einen Gehalt an polyhalogenierten Dibenzodioxinen und Dibenzofuranen von 1 bis 10 ng TE pro Nm³ hat. Ferner wird im Reingas zuverlässig ein Gehalt an polycyclischen Kohlenwasserstoffen von < 50 ng/Nm³ und ein Gehalt an polyhalogenierten Biphenylen von < 150 ng/Nm³ eingehalten. Der Gehalt des Reingases an organisch gebundenem Kohlenstoff beträgt < 10 mg/Nm³. Die nach der Erfindung vorgesehene Gasgeschwindigkeit von 6 bis 20 m/s wird dadurch realisiert, daß das staubhaltige Abgas des Sinterbandes mit den als Adsorptionsmittel wirkenden Feststoffen in einem Flugstromreaktor in Kontakt gebracht wird. Tone sind natürlich vorkommende Aluminiumsilikate mit Phyllo-Silikat-Struktur und unterschiedlichem Wassergehalt. Diatomeenerde (Kieselgur) ist ein feinkörniges Pulver und besteht aus 70 bis 90 % amorpher Kieselsäure, 3 bis 12 % Wasser und geringen Mengen von organischen Bestandteilen. Die normalerweise geglühte Diatomeenerde ist chemisch weitgehend inert und schmilzt bei 1200 bis 1700°C.

Nach der Erfindung ist ferner vorgesehen, daß als Tone Kaolinit, Bentonit oder Illit oder Mischungen davon verwendet werden. Diese Tone haben sich bei der Durchführung des Verfahrens besonders bewährt, denn bei ihrer Anwendung werden die vorgenannten Schadstoffkonzentrationen im Reingas zuverlässig eingehalten und darüber hinaus im Regelfall unterschritten, obwohl die Adsorption in Gegenwart des im Abgas enthaltenen Staubs und Wasserdampfs sowie der im Abgas enthaltenen gasförmigen Schadstoffe abläuft. Kaolinit hat die Zusammensetzung Al₂O₃•2SiO₂•2H₂O, wobei das Wasser chemisch gebunden ist und erst bei 390 bis 450°C vollständig entweicht. Der Kaolinit hat eine Schichtstruktur. Bentonit gehört zu den Bleicherden. Illit ist ein glimmerartiges Tonmineral mit der Zusammensetzung

K_{0,7} [(Al₂, Mg₃, Fe₂³⁺, Fe₃²⁺) (OH)₂] (Si_{3,3}Al_{0,7}O₁₀).

Nach der Erfindung ist ferner vorgesehen, daß den Tonen, den Schichtsilikaten, der Diatomeenerde oder den aus diesen Substanzen bestehenden Mischungen 2 bis 5 Gew.-% Aktivkohle zugesetzt werden. Durch diese Maßnahme wird einerseits die Betriebssicherheit der Anlage nicht nachteilig beeinflußt und andererseits die Adsorptionsleistung des Verfahrens erhöht. Nach der Erfindung ist es ferner vorteilhaft, wenn den Tonen, den Schichtsilikaten, der Diatomeenerde oder den aus diesen Substanzen bestehenden Mischungen 10 bis 40 Gew.-% eines Gemisches aus natürlich vorkommenden Zeolithen zugegeben werden, das vorzugsweise aus 10 bis 20 Gew.-% Mordenit, 60 bis 70 Gew.-% Clinoptilolit, 0 bis 5 Gew.-% Montmorillonit und Rest SiO₂ besteht. Durch diese Verfahrensvariante kann insbesondere der Preis des Adsorptionsmittels niedrig gehalten werden, ohne daß die Leistungsfähigkeit des Verfahrens beeinträchtigt wird.

Die der Erfindung zugrundeliegende Aufgabe wird ferner durch die Schaffung einer Vorrichtung zur Durchführung des Verfahrens gelöst, die aus einem Flugstromreaktor, einem mehrfeldrigen Elektroabscheider und einer Feststoff-Rückführleitung besteht, wobei die Feststoff-Rückführleitung den Sammelraum des ersten Feldes des Elektroabscheiders oder die Sammelräume des ersten und zweiten Feldes des Elektroabscheiders mit der in den Flugstromreaktor mündenden Abgasleitung verbindet. Mit dieser Vorrichtung wird eine weitgehende Abtrennung der im Sinterabgas enthaltenen polycyclischen und polyhalogenierten Kohlenwasserstoffe, vorzugsweise der polyhalogenierten Dibenzodioxine und Dibenzofurane sowie der staubförmigen Feststoffteilchen erreicht, so daß das aus dem Elektroabscheider austretende Abgas einen Staubgehalt < 40 mg/Nm³ sowie eine Konzentration an polyhalogenierten Dibenzodioxinen und Dibenzofuranen < 0,1 ng TE pro Nm³ aufweist. Die im Abgas enthaltenen gasförmigen Schadstoffe, insbesondere CO, SO₂, HCl und HF, können in bekannter Weise durch nachgeschaltete Reinigungsverfahren aus dem Abgasstrom entfernt werden.

In weiterer Ausgestaltung der Erfindung ist vorgesehen, daß dem Elektroabscheider ein Schlauchfilter nachgeordnet ist, wodurch Staubgehalte im Reingas realisiert werden können, die signifikant unter 40 mg/Nm³ liegen und Staubspitzen im Rohgas abgefangen werden.

Die der Erfindung zugrundeliegende Aufgabe wird alternativ durch die Schaffung einer Vorrichtung zur Durchführung des Verfahrens gelöst, die aus einem Flugstromreaktor, einem Schlauchfilter und einer Feststoff-Rückführleitung besteht, wobei die Feststoff-Rückführleitung den Sammelraum des Schlauchfilters mit der in den Flugstromreaktor mündenden Abgasleitung verbindet. Auch mit dieser Vorrichtung wird eine weitgehende Abtrennung der staubförmigen Feststoffteilchen und der polyhalogenierten Dibenzodioxine und Dibenzofurane erreicht, so daß der aus dem Schlauchfilter austretende Abgasstrom eine Staubkonzentration < 50 mg/Nm³ und eine Konzentration an polyhalogenierten Dibenzodioxinen und Dibenzofuranen < 0,1 ng TE pro Nm³ hat.

In weiterer Ausgestaltung der Erfindung ist vorgesehen, daß die Abgasleitung, in der das vom Sinterband kommende Sinterabgas geführt wird, als Flugstromreaktor gestaltet ist. Hierdurch kann in vorteilhafter Weise eine Vereinfachung der erfindungsgemäßen Vorrichtung erreicht werden, die sich positiv auf die Investitions- und Betriebskosten auswirkt.

Schließlich ist nach der Erfindung vorgesehen, daß zwischen dem Flugstromreaktor und dem mehrfeldrigen Elektroabscheider oder dem Schlauchfilter ein Zyklon angeordnet ist, der durch eine Feststoff-Leitung mit dem Flugstromreaktor in Verbindung steht. Der Zyklon entlastet den nachfolgenden Prozeßapparat, und die dort abgeschiedenen Feststoffe werden in den Flugstromreaktor zurückgeführt.

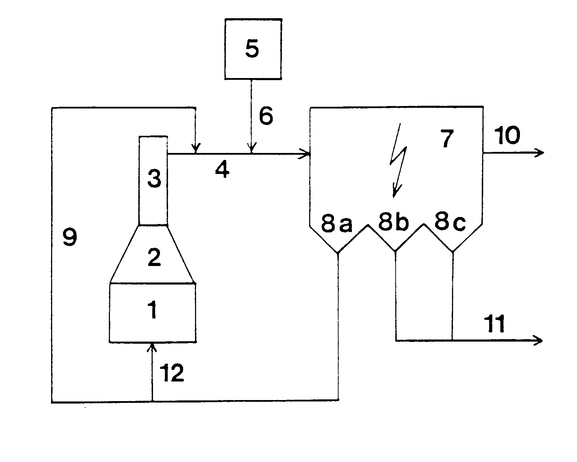

Der Gegenstand der Erfindung wird nachfolgend anhand der Zeichnung und eines Ausführungsbeispiels näher erläutert.

Auf der als Sinterband gestalteten Sintermaschine (1) werden aus Agglomeraten, die feinkörniges Eisenerz und feinkörnigen Koks enthalten, Eisenerz-Pellets hergestellt, die anschließend einem Hochofen zugeführt werden. Aus der Abgashaube (2) des Sinterbandes (1) werden pro Stunde ca. 5000 m³ Abgas in den Wärmeaustauscher (3) geführt, wo eine Abkühlung des Abgases auf ca. 200°C erfolgt. Das Abgas gelangt anschließend in die Abgasleitung, die als Flugstromreaktor (4) gestaltet ist. Das im Flugstromreaktor (4) fließende Abgas hat folgende Zusammensetzung:

| | |
|---|---|
| N₂ | 26 bis 73 % |
| O₂ | 7 bis 18 % |
| H₂O | 6 bis 36 % |
| CO₂ | 4 bis 23 % |
| CO | 0,1 bis 1 % |
| SO₂ | 100 bis 200 mg/Nm³ |
| HCl | 50 bis 80 mg/Nm³ |
| HF | < 10 mg/Nm³ |
| Staub | 400 bis 600 mg/Nm³ |
| Dibenzodioxine und Dibenzofurane | 1 bis 10 ng TE/Nm³ |

Dem im Flugstromreaktor (4) geführten Gasstrom werden pro Nm³ 0,1 bis 2 g einer Mischung aus 50 Gew.-% Bentonit und 50 Gew.-% Kaolinit aus dem Vorratsbehälter (5) über die Leitung (6) pneumatisch zudosiert. Das Adsorptionsmittel-Gemisch hat einen mittleren Teilchendurchmesser d₅₀ von 20 µm. Die im Flugstromreaktor (4) geführte Gas-Feststoff-Suspension erlangt durch Wärmeverluste und Mischeffekte eine Temperatur von ca. 140°C und tritt mit dieser Temperatur in den Elektroabscheider (7) ein, der aus drei Feldern besteht, wobei jedem Feld ein Staubbunker (8a), (8b), (8c) zugeordnet ist. Im Staubbunker (8a) des ersten Feldes des Elektroabscheiders (7) fallen ca. 90 Gew.-% des Staubs und des Adsorptionsmittel-Gemischs an. Im Staubbunker (8b) werden ca. 4 Gew.-% und im Staubbunker (8c) ca. 1 Gew.-% des Staubs und des Adsorptionsmittel-Gemischs abgeschieden, so daß das aus dem Elektroabscheider (7) austretende gereinigte Gas einen Staubgehalt < 40 mg/Nm³ aufweist. Im stationären Gleichgewicht werden aus dem Staubbunker (8a) pro Nm³ Abgas 5 bis 100 g des Feststoffgemischs in den Flugstromreaktor (4) zurückgeführt, so daß das Adsorptionsmittel-Gemisch im Flugstromreaktor mehrmals mit dem Abgas in Kontakt gebracht wird. Dieser Feststoff wird dem Flugstromreaktor (4) über die Rückführleitung (9) zugeführt. Das über die Leitung (10) aus dem Elektroabscheider (7) austretende gereinigte Abgas hat eine Konzentration an polyhalogenierten Dibenzodioxinen und Dibenzofuranen < 0,1 ng TE pro Nm³ und eine Temperatur von ca. 120°C. Bevor es in die Atmosphäre entlassen wird, können die noch vorhandenen gasförmigen Schadstoffe, insbesondere CO, SO₂, HCl und HF, durch nachgeschaltete Reinigungsverfahren abgetrennt werden. Die Feststoffe, die in den Staubbunkern (8b) und (8c) anfallen und in denen vor allem die Alkalisalze angereichert sind, werden über die Leitung (11) abgeführt. Über die Leitung (12) wird ein Teil der Feststoffe aus dem Staubbunker (8a) und damit aus dem System ausgeschleust und in die Sinteranlage (1) zurückgeführt. Die aus der Leitung (11) austretenden Feststoffe werden auf einer Deponie gelagert.

## Patentansprüche

1. Verfahren zur Abtrennung von polycyclischen und polyhalogenierten Kohlenwasserstoffen, insbesondere von polyhalogenierten Dibenzodioxinen und Dibenzofuranen, aus dem Abgas eines Sinterprozesses, insbesondere eines Eisenerz-Sinterprozesses, dadurch gekennzeichnet, daß das gesamte, staubhaltige Abgas des Sinterbandes oberhalb des Taupunktes bei einer Temperatur von 90 bis 180°C und einer Geschwindigkeit von 6 bis 20 m/s mit Tonen, Schichtsilikaten oder Diatomeenerde oder Mischungen davon in einer Gas-Feststoff-Suspension während einer Reaktionszeit von 0,5 bis 10 s in Kontakt gebracht wird, wobei der mittlere Teilchendurchmesser d₅₀ dieser Feststoffe 5 bis 100 µm und die mittlere Suspensionsdichte der Gas-Feststoff-Suspension 5 bis 500 g Feststoff pro Nm³ Abgas beträgt, daß der Staub sowie die Feststoffe anschließend gemeinsam aus der Gas-Feststoff-Suspension abgetrennt werden und daß ein Teil der abgetrennten Feststoffe mit dem Abgas des Sinterbandes erneut in Kontakt gebracht wird.

2. Verfahren nach Anspruch 1, dadurch gekennzeichnet, daß als Tone Kaolinit, Bentonit oder Illit oder Mischungen davon verwendet werden.

3. Verfahren nach den Ansprüchen 1 bis 2, dadurch gekennzeichnet, daß den Tonen, den Schichtsilikaten, der Diatomeenerde oder den aus diesen Substanzen bestehenden Mischungen 2 bis 5 Gew.-% Aktivkohle zugesetzt werden.

4. Verfahren nach den Ansprüchen 1 bis 3, dadurch gekennzeichnet, daß den Tonen, den Schichtsilikaten, der Diatomeenerde oder den aus diesen Substanzen bestehenden Mischungen 10 bis 40 Gew.-% eines Gemisches aus natürlich vorkommenden Zeolithen zugegeben werden, das vorzugsweise aus 10 bis 20 Gew.-% Mordenit, 60 bis 70 Gew.-% Clinoptilolit, 0 bis 5 Gew.-% Montmorillonit und Rest SiO₂ besteht.

5. Vorrichtung zur Durchführung des Verfahrens nach den Ansprüchen 1 bis 4, dadurch gekennzeichnet, daß sie aus einem Flugstromreaktor (4), einem mehrfeldrigen Elektroabscheider (7) und einer Feststoff-Rückführleitung (9) besteht, wobei die Feststoff-Rückführleitung (9) den Sammelraum des ersten Feldes des Elektroabscheiders (8a) oder die Sammelräume des ersten und zweiten Feldes des Elektroabscheiders (8a), (8b) mit der in den Flugstromreaktor (4) mündenden Abgasleitung verbindet.

6. Vorrichtung nach Anspruch 5, dadurch gekennzeichnet, daß dem Elektroabscheider (7) ein Schlauchfilter nachgeordnet ist.

7. Vorrichtung zur Durchführung des Verfahrens nach den Ansprüchen 1 bis 4, dadurch gekennzeichnet, daß sie aus einem Flugstromreaktor (4), einem Schlauchfilter und einer Feststoff-Rückführleitung (9) besteht, wobei die Feststoff-Rückführleitung (9) den Sammelraum des Schlauchfilters mit der in den Flugstromreaktor (4) mündenden Abgasleitung verbindet.

8. Vorrichtung nach den Ansprüchen 5 bis 7, dadurch gekennzeichnet, daß die Abgasleitung, in der das vom Sinterband kommende Sinterabgas geführt wird, als Flugstromreaktor (4) gestaltet ist.

9. Vorrichtung nach den Ansprüchen 5 bis 8, dadurch gekennzeichnet, daß zwischen dem Flugstromreaktor (4) und dem mehrfeldrigen Elektroabscheider (7) oder dem Schlauchfilter ein Zyklon angeordnet ist, der durch eine Feststoff-Leitung mit dem Flugstromreaktor (4) in Verbindung steht.

## Claims

1. A process for separating polycyclic and polyhalogenated hydrocarbons, in particular polyhalogenated dibenzodioxins and dibenzofurans, from the exhaust gas from a sintering process, in particular a sintering process for iron ore, characterised in that all the dust-containing exhaust gas from the sintering belt is brought into contact, above the dew point at a temperature of 90 to 180°C and at a rate of 6 to 20 m/s, with clays, layered silicates or diatomaceous earth or mixtures thereof in a gas/solids suspension for a reaction time of 0.5 to 10 seconds, the average particle diameter d₅₀ of these solids being 5 to 100 µm and the average suspension density of the gas/solids suspension being 5 to 500 g solids per sm³ exhaust gas, that the dust and the solids are then separated off jointly from the gas/solids suspension and that part of the solids separated off is again brought into contact with the exhaust gas from the sintering belt.

2. A process according to Claim 1, characterised in that kaolinite, bentonite or illite or mixtures thereof are used as clays.

3. A process according to Claims 1 to 2, characterised in that 2 to 5% by weight activated carbon is added to the clays, the layered silicates, the diatomaceous earth or the mixtures consisting of these substances.

4. A process according to Claims 1 to 3, characterised in that 10 to 40% by weight of a mixture of naturally occurring zeolites is added to the clays, the layered silicates, the diatomaceous earth or the mixtures consisting of these substances, which mixture preferably consists of 10 to 20% by weight mordenite, 60 to 70% by weight clinoptilolite, 0 to 5% by weight montmorillonite and remainder SiO₂.

5. An apparatus for performing the process according to Claims 1 to 4, characterised in that it consists of an entrained-bed reactor (4), a multi-field electrostatic precipitator (7) and a solids return line (9), the solids return line (9) connecting the collecting chamber of the first field of the electrostatic precipitator (8a) or the collecting chambers of the first and second field of the electrostatic precipitator (8a), (8b) to the exhaust-gas line which opens into the entrained-bed reactor (4).

6. An apparatus according to Claim 5, characterised in that a bag filter succeeds the electrostatic precipitator (7).

7. An apparatus for performing the process according to Claims 1 to 4, characterised in that it consists of an entrained-bed reactor (4), a bag filter and a solids return line (9), the solids return line (9) connecting the collecting chamber of the bag filter to the exhaust-gas line which opens into the entrained-bed reactor (4).

8. An apparatus according to Claims 5 to 7, characterised in that the exhaust-gas line in which the sintering exhaust gas coming from the sintering belt is carried is in the form of an entrained-bed reactor (4).

9. An apparatus according to Claims 5 to 8, characterised in that a cyclone is arranged between the entrained-bed reactor (4) and the multi-field electrostatic precipitator (7) or the bag filter, which cyclone is connected to the entrained-bed reactor (4) via a solids line.

## Revendications

1. Procédé de séparation d'hydrocarbures polycycliques et polyhalogénés, notamment de dibenzodioxines et de dibenzofuranes polyhalogénés, de l'effluent gazeux d'une opération d'agglomération, notamment d'une opération d'agglomération de minerai de fer, caractérisé en ce qu'il consiste à mettre tout l'effluent gazeux, contenant de la poussière, de la bande d'agglomération au-dessus du point de rosée à une température de 90 à 180°C et à une vitesse de 6 à 20 m/s en contact avec des argiles, des silicates feuilletés ou de la terre de diatomées ou leurs mélanges, en une suspension gaz-matière solide pendant une durée de réaction d'une demi-seconde à 10 s, le diamètre moyen de particule d₅₀ de cette matière solide étant de 5 à 100 µm, et la masse volumique moyenne de la suspension de gaz et de matière solide étant de 5 à 500 g de matière solide par mètre cube normal d'effluent gazeux, à séparer la poussière ainsi que les matières solides en commun de la suspension de gaz et de matière solide et à remettre une partie de la matière solide séparée en contact avec l'effluent gazeux de la bande d'agglomération.

2. Procédé suivant la revendication 1, caractérisé en ce qu'il consiste à utiliser comme argiles de la kaolinite, de la bentonite ou de l'illite ou leurs mélanges.

3. Procédé suivant la revendication 1 ou 2, caractérisé en ce qu'il consiste à ajouter aux argiles, aux silicates feuilletés, à la terre de diatomées ou aux mélanges constitués de ces substances de 2 à 5 % en poids de charbon actif.

4. Procédé suivant l'une des revendications 1 à 3, caractérisé en ce qu'il consiste à ajouter aux argiles, aux silicates feuilletés, à la terre de diatomées ou aux mélanges constitués de ces substances de 10 à 40 % en poids d'un mélange de zéolite d'origine naturelle, qui est constitué de préférence de 10 à 20 % en poids de mordénite, de 60 à 70 % en poids de clinoptilolite et de 0 à 5 % en poids de montmorillonite, le reste étant du SiO₂.

5. Installation pour la mise en oeuvre du procédé selon l'une des revendications 1 à 4, caractérisée en ce qu'elle est constituée d'un réacteur (4) à courant volant, d'un électroséparateur (7) à plusieurs champs et d'un conduit (9) de retour de la matière solide, le conduit (9) de retour de la matière solide mettant la chambre collectrice du premier champ de l'électroséparateur (8a) ou les chambres collectrices du premier et du deuxième champ de l'électroséparateur (8a), (8b), en communication avec le conduit pour l'effluent gazeux qui débouche dans le réacteur (4) à courant volant.

6. Installation suivant la revendication 5, caractérisée en ce qu'un filtre à manche est monté en aval de l'électroséparateur (7).

7. Installation pour la mise en oeuvre du procédé suivant l'une des revendications 1 à 4, caractérisée en ce qu'elle est constituée d'un réacteur (4) à courant volant, d'un filtre à manche et d'un conduit (9) de retour de la matière solide, le conduit (9) de retour de la matière solide mettant la chambre collectrice du filtre à manche en communication avec le conduit pour l'effluent gazeux qui débouche dans le réacteur (4) à courant volant.

8. Installation suivant les revendications 5 à 7, caractérisée en ce que le conduit pour l'effluent gazeux, dans lequel passe l'effluent gazeux d'agglomération venant de la bande d'agglomération, est conformé en réacteur (4) à courant volant.

9. Installation suivant les revendications 5 à 8, caractérisée en ce qu'il est monté entre le réacteur (4) à courant volant et l'électroséparateur (7) à plusieurs champs ou le filtre à manche un cyclone qui communique avec le réacteur (4) à courant volant par un conduit pour de la matière solide.
